# EUROPEAN PATENT SPECIFICATION

(11) **EP 4 614 725 B1**
(45) Date of publication and mention of the grant of the patent: **11.11.2026**
(21) Application number: 22967025.2
(22) Date of filing: 26.12.2022
(51) Int. Cl.: H04B 1/04, H01Q 3/34, H04B 1/18

(54) **PHASED ARRAY ANTENNA AND ELECTRONIC DEVICE**
PHASENGESTEUERTE GRUPPENANTENNE UND ELEKTRONISCHE VORRICHTUNG
ANTENNE RÉSEAU À COMMANDE DE PHASE ET DISPOSITIF ÉLECTRONIQUE

(30) Priority: 30.11.2022 CN 202211513061
(43) Date of publication of application: 10.09.2025
(73) Proprietor: Chengdu T-Ray Technology Co., Ltd., Chengdu, Sichuan 610002 (CN)
(72) Inventor: LUO, Xuan, Chengdu, Sichuan 610002 (CN); ZHOU, Mingming, Chengdu, Sichuan 610002 (CN)
(74) Representative: Ciallié, Giorgio
(86) International application number: PCT/CN2022/141834
(87) International publication number: WO 2024/113441

(56) References cited:
- CN-A- 105 743 518
- CN-A- 114 866 096
- US-A1- 2011 189 964
- US-A1- 2011 189 964
- US-A1- 2013 325 149
- US-A1- 2017 279 437
- US-A1- 2018 159 222
- US-A1- 2019 253 087
- US-A1- 2022 328 964
- US-A1- 2022 328 964
- LIU HAN-FEI, JIAN CHENG: "Algorithm for Automatic Impedance Matching", COMPUTER ENGINEERING, 5 May 2009 (2009-05-05), pages 275 - 277, XP093175586

## Description

### FIELD OF THE DISCLOSURE

This application relates to the field of communication, specifically, it relates to a phased array antenna and electronic equipment.

### BACKGROUND OF THE DISCLOSURE

The active standing wave of the phased array antenna is caused by the energy mutual coupling phenomenon between antenna units, which will lead to the deterioration of the standing wave of the antenna units, that is, the input impedance of the antenna units changes. Then, impedance mismatch occurs between the antenna units and the original cascade circuit, thereby causing energy loss. In addition, since the beam of the phased array antenna is not fixed during operation, when the beam is scanned, the amplitude and phase of the mutual coupling energy will change, that is, the input impedance of the antenna units is not fixed with the beam scanning. For the active phased array antenna, since the antenna units are directly connected with the power amplifier or the low noise amplifier, the changed antenna unit impedance will cause additional deterioration of the key performance of the amplifier, such as output power, efficiency and noise index.

Various antenna tuner circuits and impedance tuning techniques have been proposed in the art to improve the impedance matching between a radio-frequency circuit and an antenna. For example, US 2022/0328964 A1 (D1) discloses an antenna tuner for a beamforming antenna array. The antenna tuner is arranged between a radio front-end circuit and the antenna array and comprises an impedance tuning network and a controller. The controller selects tuner settings, including switch states and values of reactive elements, for different beam configurations based on matching-quality information obtained from measurement circuits which sense forward and reflected signals at the tuner input. In this way, D1 aims at improving the impedance matching for different beams of a beamforming antenna array.

US 2013/0325149 A1 (D2) relates to methods and apparatus for tuning circuit components of a communication device. D2 discloses a tunable matching network including tunable reactive elements, such as tunable capacitors and/or inductors, which are controlled by a processing circuit. The processing circuit evaluates one or more performance indicators of the communication device, such as power, efficiency or linearity, and adjusts the matching network accordingly so as to improve the impedance match between a power amplifier and an antenna. US 2011/0189964 A1 (D3) likewise addresses impedance matching for a high-frequency signal transmitter. In D3, a reflection characteristic of a load is detected, and a control circuit determines, on the basis of the detected reflection characteristic, how to adjust an impedance matching network so that the reflection characteristic falls within a desired region associated with acceptable transmitter performance.

US 2017/0279437 A1 (D4) further discloses flexible L-network antenna tuner circuits. In D4, an antenna tuner is implemented by an L-network of reactive elements in combination with one or more RF switches. By selecting different switch configurations, different impedance-transformation topologies are obtained so that the impedance seen by the RF circuit can be tuned over a range of operating conditions. US 2019/0253087 A1 (D5) also relates to an antenna impedance tuner including multiple reactive elements and switching elements configured to form different impedance-transformation networks. In D5, the tuner is controlled so as to provide appropriate impedance transformations for different antenna or load impedances, and it is further taught that the impedance tuning unit may be disabled or bypassed when the signal transmission line is already in a matched state so as to reduce insertion loss.

Although D1-D5 provide various solutions for antenna tuners and impedance matching between radio-frequency circuits and antennas, they mainly focus on general antenna systems or beamforming antenna arrays in which a single tuner is arranged between a radio front-end and an antenna or antenna array. None of D1-D5 addresses the specific problem of active standing waves caused by mutual coupling between antenna units in an active phased array antenna in which each antenna unit is directly cascaded with an active circuit, nor do they disclose an active standing wave tuning apparatus connected in series between each antenna unit and its cascaded active circuit and configured to perform real-time impedance tuning at each beam switching event based on amplitude and phase information of forward and reflected sampling signals.

### SUMMARY OF THE DISCLOSURE

The purpose of this application is to provide a phased array antenna and electronic equipment to at least partially improve the above problems.

In order to achieve the above object, the technical scheme of the application is as follows:
In a first aspect, the application provides a phased array antenna, which comprises an antenna unit, an active circuit, a first control unit and an active standing wave tuning apparatus, wherein the active standing wave tuning apparatus comprises an impedance tuning unit, a reflection coefficient detection unit and a second control unit;
the active circuit is connected to a first end of the impedance tuning unit, the antenna unit is connected to a first end of the reflection coefficient detection unit, a second end of the impedance tuning unit is connected to a second end of the reflection coefficient detection unit, a first end of the second control unit is connected to the first control unit, a second end of the second control unit is connected to a third end of the reflection coefficient detection unit, and a third end of the second control unit is connected to a third end of the impedance tuning unit.
the second control unit is configured to send a trigger instruction to the reflection coefficient detection unit after receiving a beam switching command transmitted by the first control unit;
the reflection coefficient detection unit is configured to collect amplitude and phase information of a first sampling signal and a second sampling signa after acquiring the trigger instruction, and transmit the collected amplitude and phase information to the second control unit;
wherein the first sampling signal is a sampling signal incident on the antenna unit, and the second sampling signal is a reflection signal of the antenna unit;
the second control unit is configured to obtain a reflection coefficient based on the amplitude and phase information of the first and second sampling signals,
wherein the reflection coefficient includes an amplitude ratio and a phase ratio, the amplitude ratio is a ratio of an amplitude of the first sampling signal to the amplitude of the second sampling signal, and the phase ratio is a ratio of the phase of the first sampling signal to the phase of the second sampling signal;
the second control unit is further configured to generate a tuning instruction based on the reflection coefficient and transmit the tuning instruction to the impedance tuning unit;
the impedance tuning unit is configured to execute the tuning instruction.
the impedance tuning unit comprises a digitally controlled phase shifter, a first switch, a first capacitor, and a first inductor;
the first end of the digitally controlled phase shifter serves as the first end of the impedance tuning unit and is connected to the active circuit, a second end of the digitally controlled phase shifter serves as the second end of the impedance tuning unit and is connected to the second end of the reflection coefficient detection unit;
the first end of the first switch is connected to the first end of the digitally controlled phase shifter, the second end of the first switch is open, the third end of the first switch is connected to the first end of the first capacitor, and the fourth end of the first switch is connected to the first end of the first inductor;
the second end of the first capacitor and the second end of the first inductor are grounded;
the third end of the digitally controlled phase shifter and the fifth end of the first switch are both connected to the third end of the second control unit.
the tuning instruction includes a target phase shift amount of the digitally controlled phase shifter and a switching status indication of the first switch, wherein the switching status indication indicates an open-and-closed state between the first end and the second, or the third, or the fourth end, of the first switch.
the first capacitor is a tunable capacitor, the first inductor is a tunable inductor, and the third end of the first capacitor and the third end of the first inductor are both connected to the third end of the second control unit.
when the switching status indication characterizes that the first end of the first switch is closed with the third end, the tuning command further includes a target capacitance value of the tunable capacitor;
when the switching status indication characterizes that the first end of the first switch is in a closed connection with the fourth end, the tuning instruction further includes a target inductance value of the tunable inductor.
when the reflection coefficient indicates that the antenna unit is in a matched state, the target phase shift amount is zero, and the switching status indication characterizes that the first end of the first switch is in a closed connection with the second end.
the reflection coefficient detection unit comprises a dual-directional coupler and an amplitude-and-phase detector;
the first end of the dual-directional coupler serves as the first end of the reflection coefficient detection unit and is connected to the antenna unit, the second end of the dual-directional coupler serves as the second end of the reflection coefficient detection unit and is connected to the second end of the impedance tuning unit;
the amplitude-and-phase detector is connected to the dual-directional coupler and the second control unit respectively.
the first control unit is configured to adjust the antenna unit according to the beam scanning instruction transmitted from a host computer, and transmit the beam switching command to the second control unit after the adjustment is completed.

In a second aspect, an embodiment of the present application provides an electronic device, the electronic device comprising the phased array antenna.

Compared with the prior art, the phased array antenna and the electronic device provided by the embodiment of the application, the phased array antenna comprises an antenna unit, an active circuit, a first control unit and an active standing wave tuning apparatus, the active standing wave tuning apparatus comprises an impedance tuning unit, a reflection coefficient detection unit and a second control unit; the active circuit is connected to a first end of the impedance tuning unit, the antenna unit is connected to a first end of the reflection coefficient detection unit, a second end of the impedance tuning unit is connected to a second end of the reflection coefficient detection unit, a first end of the second control unit is connected to the first control unit, a second end of the second control unit is connected to a third end of the reflection coefficient detection unit, and a third end of the second control unit is connected to a third end of the impedance tuning unit. Real-time impedance matching between the antenna unit and the cascaded active circuit is achieved by the active standing wave tuning apparatus, the active standing wave of the phased array antenna is suppressed, and the performance of an amplifier in a subsequent circuit is prevented from being deteriorated. Energy loss is avoided and ferrite material is not required, and the phased array antenna is suitable for chip integration and application to a millimeter wave phased array antenna. The phased array antenna is not limited by the antenna unit and the antenna array form, and can be theoretically applied to any phased array antenna array.

In order to make the above objectives, features and advantages of the application more obvious and understandable, the following preferred embodiments are specifically described in detail below with reference to the accompanying drawings.

### BRIEF DESCRIPTION OF THE DRAWINGS

In order to more clearly illustrate the technical solutions of the embodiments of the application, the following briefly introduces the drawings required in the embodiments. It should be understood that the following drawings only show some of the embodiments of the application, and therefore should not be considered as limiting the scope. For those skilled in the art, other related drawings can also be obtained according to these drawings without creative efforts.
FIG. 1 is a structural schematic diagram of a phased array antenna provided by the embodiment of the application;
FIG. 2 is a structural schematic diagram of an impedance tuning unit provided by the embodiment of the application;
FIG. 3a is a schematic diagram of tuning of the impedance tuning unit to mismatched impedance provided by the embodiment of the application;
FIG. 3b is a schematic diagram of tuning of the impedance tuning unit to mismatched impedance provided by the embodiment of the application;
FIG. 3c is a schematic diagram of tuning of the impedance tuning unit to mismatched impedance provided by the embodiment of the application;
FIG. 4 is a structural schematic diagram of a reflection coefficient detection unit provided by the embodiment of the present application.

In the figure: 10-active circuit; 20-antenna unit; 30-first control unit; 40-active standing wave tuning apparatus; 401-second control unit; 402-reflection coefficient detection unit; 403-impedance tuning unit; 402A-dual-directional coupler; 402B- amplitude-and-phase detector.

### DETAILED IMPLEMENTATION OF THE DISCLOSURE

In order to make the purpose, technical scheme and advantages of the embodiments of the present application clearer, the technical scheme in the embodiments of the present application will be described clearly and completely below in conjunction with the drawings in the embodiments of the present application. Obviously, the described embodiments are some of the embodiments of the present application but not all of the embodiments. The components of the embodiments of the present application described and shown in the drawings herein can be arranged and designed in various different configurations.

Therefore, the following detailed description of the embodiments of the present application provided in the drawings is not intended to limit the scope of the claimed present application, but merely represents selected embodiments of the present application. All other embodiments obtained by those of ordinary skill in the art based on the embodiments in the present application without creative work are within the scope of the present application.

It should be noted that like reference numerals and letters in the following figures designate similar items, and therefore once an item is defined in one figure, it is not necessary to further define and explain it in subsequent figures. Meanwhile, in the description of the present application, the terms "first", "second", and the like are only used to distinguish the description, and cannot be understood as indicating or implying relative importance.

It is to be noted that, in this document, relational terms such as first and second and the like can be used solely to distinguish one entity or action from another entity or action without necessarily requiring or implying any actual such relationship or order between such entities or actions. Also, the terms "comprises," "comprising," or any other variation thereof, are intended to cover a non-exclusive inclusion, such that a process, method, article, or apparatus that comprises a list of elements does not include only those elements but can include other elements not expressly listed or inherent to such process, method, article, or apparatus. An element proceeded by "comprises...a" does not, without more constraints, preclude the existence of additional identical elements in the process, method, article, or apparatus that comprises the element.

In the description of the application, it should be noted that the terms "upper", "lower", "inner", "outer" and the like indicate the position or positional relationship based on the position or positional relationship shown in the drawings, or the position or positional relationship when the product of the application is usually placed, only for the convenience of describing the application and simplifying the description, and do not indicate or imply that the device or element referred to must have a specific position, be constructed and operated in a specific position, and therefore cannot be understood as a limitation on the application.

In the description of the application, it should be further noted that, unless otherwise explicitly specified and limited, the terms "setting", "connecting" should be understood in a broad sense, for example, can be fixedly connected, or can be detachably connected, or integrally connected; can be mechanically connected, or can be electrically connected; can be directly connected, or can be indirectly connected through an intermediate medium, or can be the communication inside two elements. For those of ordinary skill in the art, the specific meanings of the above terms in the application can be understood in specific circumstances.

In the following, some embodiments of the application will be described in detail with reference to the drawings. The following examples and features in the examples can be combined with each other without conflict.

At present, the main two possible implementations of suppressing the active standing wave of the phased antenna are as follows.

The first way is to connect a component with unidirectional or directional transmission, such as an isolator or circulator, in series between the antenna unit and the cascaded circuit (active circuit). The main defects of this way are as follows:
the isolator or circulator can reduce the reflected energy from entering the amplifier, and ensure that the active standing wave of the antenna unit does not affect the performance of the amplifier as much as possible. However, the reflected energy caused by the mismatch is still transmitted to the absorption load or the receiving channel by the isolator or circulator, thereby being lost.

In a transceiving half-duplex link, the receiving channel will be at risk of being blocked or burned out, because the circulator needs to transmit the reflected energy of the antenna unit to the receiving channel.

The isolator and the circulator are made of ferrite material and are usually large in size, and the isolator and the circulator are different from the production process of semiconductor chips, and thus cannot be integrated with other semiconductor circuits in one chip. Therefore, this solution is not suitable for millimeter wave phased array antennas which are reduced in size with the increase of frequency.

The second way is to increase the spacing between the antenna units or take isolation measures to improve the isolation between the antenna units. The main defects of this way are as follows:
the performance is greatly limited. Although the increase of the spacing between the antenna units can reduce the mutual coupling of the energy between the antenna units, the beam scanning range of the phased array will be reduced. Therefore, the application range of this solution is limited.

The process has a large limitation. The isolation measure between antenna units is usually realized by a special isolation circuit. For example, a microstrip antenna array usually adopts a grounding via to realize the isolation between antenna units. As the frequency increases, the via spacing needs to be smaller. Therefore, the processing technology of the via directly limits the highest frequency of the isolation circuit. In addition, antenna units have various forms, and not all antenna unit forms have an isolation measure suitable for the antenna form.

In order to overcome the above problems, the embodiment of the application provides a phased array antenna to improve the circuit architecture of an active standing wave of the phased array antenna. The architecture can realize real-time impedance matching between an antenna unit and a cascade circuit. The architecture avoids energy loss in the existing scheme and does not need ferrite material to be realized in the architecture, is suitable for chip integration, and is suitable for application of a millimeter wave phased array antenna. The architecture is not limited by an antenna unit and an antenna array form, and can be theoretically applied to any phased array antenna array.

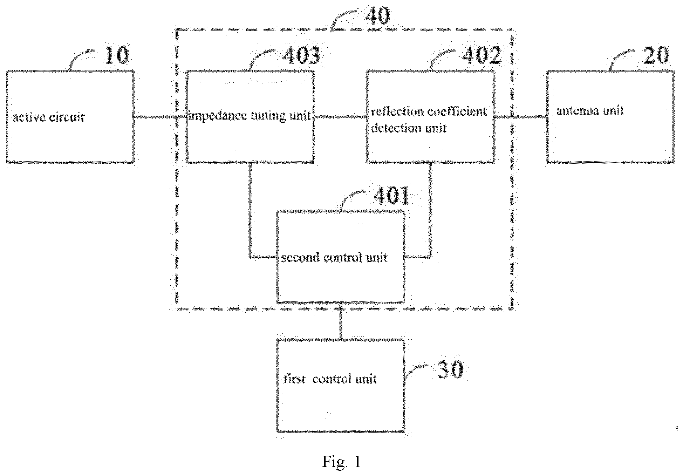

Specifically, referring to FIG. 1 which is a structural schematic diagram of a phased array antenna provided by the embodiment of the application. As shown in FIG. 1, the phased array antenna comprises an antenna unit 20, an active circuit 10, a first control unit 30, and an active standing wave tuning apparatus 40, wherein the active standing wave tuning apparatus 40 is connected in series between the antenna unit 20 and the active circuit 10. Optionally, the active circuit 10 comprises an amplifier.

Referring to FIG. 1, the active standing wave tuning apparatus 40 comprises an impedance tuning unit 403, a reflection coefficient detection unit 402, and a second control unit 401.

The active circuit 10 is connected to a first end of the impedance tuning unit 403, the antenna unit 20 is connected to a first end of the reflection coefficient detection unit 402, a second end of the impedance tuning unit 403 is connected to a second end of the reflection coefficient detection unit 402, a first end of the second control unit 401 is connected to the first control unit 30, a second end of the second control unit 401 is connected to a third end of the reflection coefficient detection unit 402, and a third end of the second control unit 401 is connected to a third end of the impedance tuning unit 403.

It should be noted that the active standing wave tuning apparatus 40 does not transport the reflected energy to the absorbing load or receiving channel relative to the isolator or circulator, and does not cause energy loss. It also does not increase the risk of blocking or burning of the receiving channel. The active standing wave tuning apparatus 40 can be generated by a chip process, has a small size, can be integrated with other semiconductor circuits in a chip, and is suitable for a millimeter wave phased array antenna with a reduced size as the frequency increases.

It should be further noted that the active standing wave tuning apparatus 40 provided by the embodiment of the application is used for impedance matching, and does not need to separately perform an isolator circuit setting or set a ground hole with a very small via hole spacing, thereby reducing the production difficulty and ensuring the frequency expansion range of the phased array antenna. The active standing wave tuning apparatus 40 is not limited by an antenna unit and an array form, and is applicable to any form of antenna unit and antenna array.

In an optional embodiment, the second control unit 401 is configured to send a trigger instruction to the reflection coefficient detection unit 402 after receiving the beam switching command transmitted by the first control unit 30.

The reflection coefficient detection unit 402 is configured to collect amplitude and phase information of the first sampling signal and the second sampling signal after receiving the trigger instruction and transmit the collected amplitude and phase information to the second control unit 401.

Wherein the first sampling signal is a sampling signal of the incident antenna unit 20, and the second sampling signal is a reflection signal of the antenna unit 20.

The second control unit 401 is configured to obtain a reflection coefficient based on the amplitude and phase information of the first sampling signal and the second sampling signal.

Wherein the reflection coefficient includes an amplitude ratio and a phase ratio, the amplitude ratio is a ratio of an amplitude of the first sampling signal to an amplitude of the second sampling signal, and the phase ratio is a ratio of a phase of the first sampling signal to a phase of the second sampling signal.

The second control unit 401 is further configured to generate a tuning instruction based on the reflection coefficient, and transmit the tuning instruction to the impedance tuning unit 403.

The impedance tuning unit 403 is configured to execute the tuning instruction.

Optionally, the impedance tuning unit 403 implements the adjustment of the already mismatched antenna unit 20 to the impedance matched with the active circuit 10 cascaded at the other end by executing the tuning instruction, that is, the tuning of the active standing wave is implemented, and the mismatch problem between the antenna unit 20 and the active circuit 10 caused by the active standing wave is eliminated.

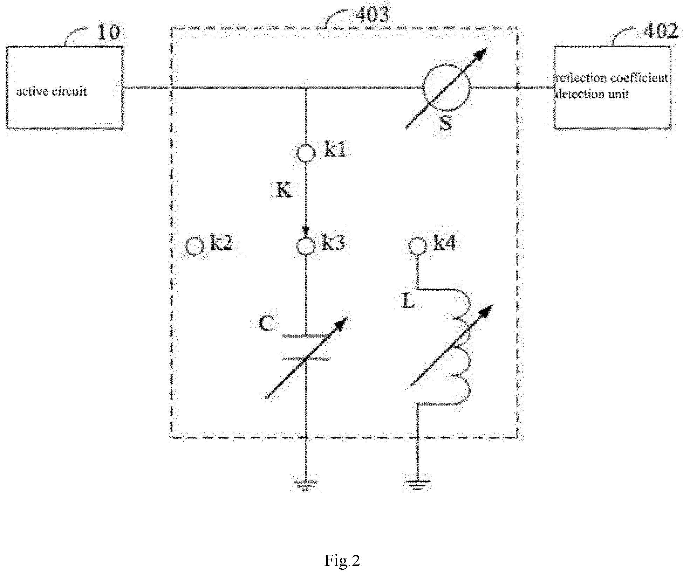

It should be understood that the impedance tuning unit 403 is a core microwave circuit unit for implementing the active standing wave optimization of the antenna unit 20. On the basis of FIG. 1, for the structure of the impedance tuning unit, the embodiment of the application further provides a possible implementation manner, please refer to FIG. 2, which is a schematic structural diagram of the impedance tuning unit provided by the embodiment of the application.

As shown in FIG. 2, the impedance tuning unit 403 includes a digitally controlled phase shifter S, a first switch K, a first capacitor C, and a first inductor L.

A first end of the digitally controlled phase shifter S is connected to the active circuit 10 as a first end of the impedance tuning unit 403, and a second end of the digitally controlled phase shifter S is connected to the second end of the reflection coefficient detection unit 402 as a second end of the impedance tuning unit 403.

A first end k1 of the first switch K is connected to the first end of the digitally controlled phase shifter S, a second end k2 of the first switch K is suspended, a third end k3 of the first switch K is connected to a first end of the first capacitor C, and a fourth end k4 of the first switch K is connected to a first end of the first inductor L.

A second end of the first capacitor C and a second end of the first inductor L are grounded.

A third end of the digitally controlled phase shifter S and a fifth end of the first switch K are both connected to a third end of the second control unit 401.

Optionally, the third end of the second control unit 401 includes a plurality of sub-ports, wherein two sub-ports are respectively connected to the third end of the digitally controlled phase shifter S and the fifth end of the first switch K, and then the digitally controlled phase shifter S and the first switch K can be controlled based on the sending of corresponding instructions by the sub-ports.

In an optional embodiment, the tuning instruction comprises a target phase shift amount of the digital controlled phase shifter S and switching status indication of the first switch K, wherein the open/closed indication information represents the open/closed state between the first end and the second end, the third end and the fourth end of the first switch K.

After obtaining the tuning instruction, the digital controlled phase shifter S adjusts its phase shift amount to the target phase shift amount, and the first switch K adjusts its open-and-closed status according to the switching status indication.

Optionally, by changing the target phase shift amount of the digital controlled phase shifter S and the switching status indication of the first switch K, the input impedance matching of the antenna unit 20 can be completed, and the active standing wave can be optimized.

Please continue to refer to FIG. 2, in order to further improve the effect of impedance matching, the embodiment of the application further provides a possible implementation manner, please refer to the following.

The first capacitor C is a tunable capacitor, the first inductor L is a tunable inductor, and the third ends of the first capacitor C and the first inductor are connected to the third end of the second control unit 401.

In an optional embodiment, when the switching status indication represents that the first end K1 and the third end K3 of the first switch K are in closed connection, the tuning instruction further comprises a target capacitance value of the tunable capacitor.

After obtaining the tuning instruction, the first capacitor C adjusts its capacitance value to the target capacitance value.

When the switching status indication represents that the first end K1 and the fourth end K4 of the first switch K are in closed connection, the tuning instruction further comprises a target inductance value of the tunable inductor.

After obtaining the tuning instruction, the first inductor L adjusts its inductance value to the target inductance value.

It should be understood that by adjusting the capacitance value and the inductance value, the impedance matching degree is improved, and the optimization effect of the active standing wave is improved.

According to the invention, when the reflection coefficient represents that the antenna unit 20 is in the matching state, the target phase shift amount is 0, and the switching status indication information represents that the first end and the second end of the first switch K are in closed connection.

Optionally, the second control unit 401 can determine whether the antenna unit 20 is in the matching state based on the amplitude ratio, for example, when the amplitude ratio is greater than a preset ratio threshold, it is determined that the antenna unit 20 is not in the matching state. Alternatively, whether the antenna unit 20 is in the matching state is determined based on the beam pointing of the phased array antenna. For example, when the beam pointing of the phased array antenna is normal, the antenna unit 20 is in the matching state, that is, the impedance tuning unit 403 does not need to work. At this time, the phase shifter in the impedance tuning unit 403 has a phase shift of 0°, and the first switch K is switched to an open circuit, that is, the first end k1 and the second end k2 of the first switch K are closed. The first switch K can be, but is not limited to, a single-pole three-throw switch.

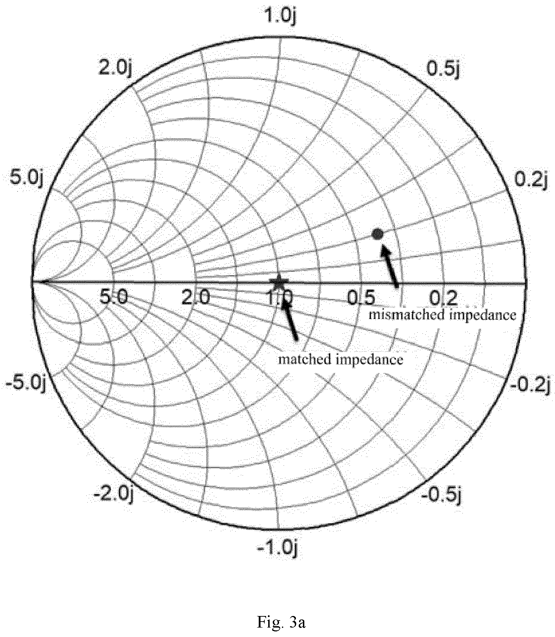

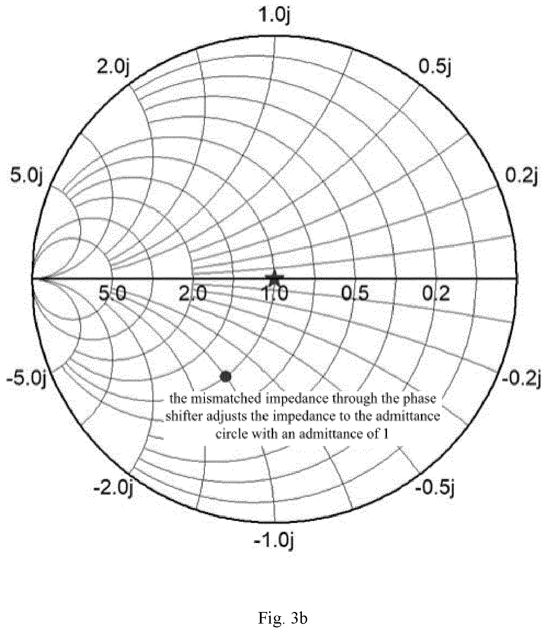

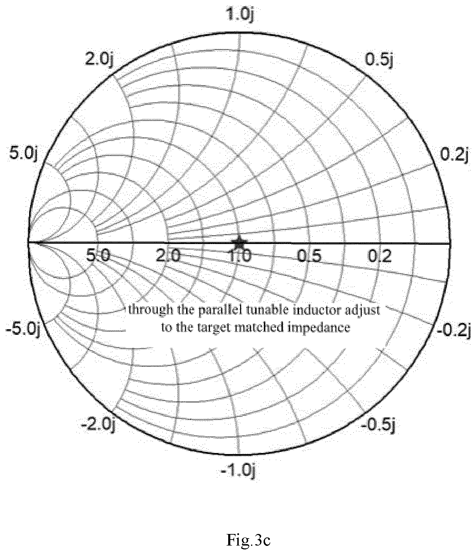

Optionally, regarding how to achieve impedance matching, the embodiment of the application further provides an optional implementation manner, please refer to FIG. 3a, FIG. 3b and FIG. 3c. FIG. 3a is a schematic diagram of one of the tuning of the impedance tuning unit to the mismatched impedance provided by the embodiment of the application, FIG. 3b is a schematic diagram of two of the tuning of the impedance tuning unit to the mismatched impedance provided by the embodiment of the application, and FIG. 3c is a schematic diagram of three of the tuning of the impedance tuning unit to the mismatched impedance provided by the embodiment of the application. According to the classic microwave circuit theory and the Smith chart, when the antenna unit 20 has impedance mismatch, the input impedance thereof will deviate from 50ohm on the Smith chart, and can be in any region of the chart. Therefore, the mismatched impedance first passes through the phase shifter of the impedance tuning unit 403, the phase shifter adjusts the impedance to the admittance circle with an admittance of 1, and then the mismatched impedance is returned to 50ohm through the parallel inductance or the parallel capacitance. Finally, the active standing wave is tuned.

The numbers on the horizontal axis of the circle chart in FIG. 3a, FIG. 3b and FIG. 3c represent the real part of the input impedance, that is, the resistance value, for example, 5.0, 2.0, 1.0, 0.5 and 0.2 in the figure. The numbers around the circle represent the imaginary part of the input impedance, that is, the reactance value, for example, 5.0j, 2.0j, 1.0j, 0.5j, 0.2j, -5.0j, -2.0j, - 1.0j, -0.5j, -0.2j in the figure.

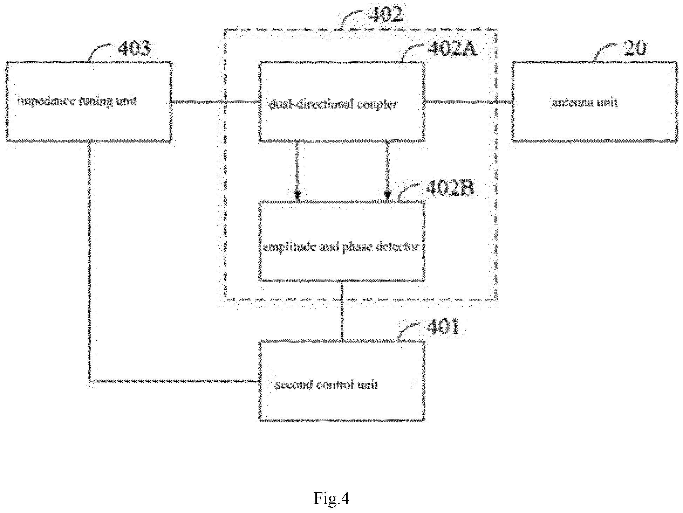

On the basis of FIG. 1, for the reflection coefficient detection unit 402, the embodiment of the application further provides a possible implementation manner, please refer to FIG. 4, which is a structural schematic diagram of the reflection coefficient detection unit provided by the embodiment of the application.

As shown in FIG. 4, the reflection coefficient detection unit 402 includes a dual-directional coupler 402A and an amplitude-and-phase detector 402B.

The first end of the dual-directional coupler 402A is connected to the antenna unit 20 as the first end of the reflection coefficient detection unit 402, and the second end of the dual-directional coupler 402A is connected to the second end of the impedance tuning unit 403 as the second end of the reflection coefficient detection unit 402.

The amplitude-and-phase detector 402B is connected to the dual-directional coupler 402A and the second control unit 401 respectively.

The dual-directional coupler 402A and the amplitude-and-phase detector 402B can be but are not limited to implemented by using an AD9032 chip.

The dual-directional coupler 402A can obtain the first sampling signal and the second sampling signal, and can transmit the obtained first sampling signal and second sampling signal to the amplitude-and-phase detector 402B to obtain amplitude and phase information of the first sampling signal and the second sampling signal. The amplitude and phase information includes amplitude information and phase information.

The amplitude-and-phase detector 402B can transmit the obtained amplitude and phase information of the first sampling signal and the second sampling signal to the second control unit 401, and the second control unit 401 can calculate the reflection coefficient based on the amplitude and phase information of the first sampling signal and the second sampling signal, and then perform tuning control. The second control unit 401 can also obtain the active multicast of the antenna unit 20 based on the amplitude and phase information of the first sampling signal and the second sampling signal, represent the input impedance of the antenna unit 20, and then generate a tuning instruction based on this to complete the tuning control.

In an optional embodiment, the first control unit 30 is configured to, when receiving the beam scanning instruction transmitted by the host computer, adjust the antenna unit 20 according to the beam scanning instruction, and after the adjustment is completed, send a beam switching command to the second control unit 401.

It should be understood that adjusting the antenna unit 20 changes the reflection coefficient of the antenna unit 20, specifically, changes the active standing wave and the input impedance, so that impedance adaptation needs to be performed again.

In summary, the embodiment of the application provides a phased array antenna, which comprises an antenna unit, an active circuit, a first control unit and an active standing wave tuning apparatus. The active standing wave tuning apparatus comprises an impedance tuning unit, a reflection coefficient detection unit and a second control unit. The active circuit is connected to a first end of the impedance tuning unit. The antenna unit is connected to a first end of the reflection coefficient detection unit. A second end of the impedance tuning unit is connected to a second end of the reflection coefficient detection unit. A first end of the second control unit is connected to the first control unit. A second end of the second control unit is connected to a third end of the reflection coefficient detection unit. A third end of the second control unit is connected to a third end of the impedance tuning unit. The active standing wave tuning apparatus is used to realize real-time impedance matching between the antenna unit and the cascaded active circuit, suppress the active standing wave of the phased array antenna and avoid deterioration of the performance of the amplifier in the subsequent circuit. Energy loss is avoided and ferrite material is not required, so that the phased array antenna is suitable for chip integration and application to millimeter wave phased array antennas. The phased array antenna is not limited by the antenna unit and the antenna array form and can be applied to any phased array antenna array in theory.

Optionally, the embodiment of the application further provides an electronic device, which comprises the phased array antenna. The electronic device can be a satellite communication terminal, a satellite base station, other communication devices and the like.

The above description is merely illustrative of the preferred embodiments of this application and is not intended to limit the application. For those skilled in the art, various modifications and changes may be made to this application.

To those skilled in the art, it is apparent that this application is not limited to the details of the exemplary embodiments described above. Therefore, the embodiments should be regarded as illustrative and non-restrictive in all respects. The scope of this application is defined by the appended claims rather than the foregoing description. No reference numerals in the claims shall be construed as limiting the claims concerned.

## Claims

1. A phased array antenna, **characterized in that** the phased array antenna comprises an antenna unit (20), an active circuit (10), a first control unit (30), an active standing wave tuning apparatus (40) connected in series between the antenna unit (20) and the active circuit (10),
wherein the active standing wave tuning apparatus (40) comprises an impedance tuning unit (403), a reflection coefficient detection unit (402), and a second control unit (401);
wherein, the active circuit (10) is connected to a first end of the impedance tuning unit (403), the antenna unit (20) is connected to a first end of the reflection coefficient detection unit (402), a second end of the impedance tuning unit (403) is connected to a second end of the reflection coefficient detection unit (402), a first end of the second control unit (401) is connected to the first control unit (30), a second end of the second control unit (401) is connected to a third end of the reflection coefficient detection unit (402), and a third end of the second control unit (401) is connected to a third end of the impedance tuning unit (403);
wherein, the second control unit (401) is configured to send a trigger instruction to the reflection coefficient detection unit (402) after receiving a beam switching command transmitted from the first control unit (30);
wherein, the reflection coefficient detection unit (402) is configured to collect amplitude and phase information of a first sampling signal and a second sampling signal after acquiring the trigger instruction, and transmit the collected amplitude and phase information to the second control unit (401);
wherein, the first sampling signal is a sampling signal incident to the antenna unit (20), and the second sampling signal is a reflected signal from the antenna unit (20);
wherein, the second control unit (401) is configured to obtain a reflection coefficient based on the amplitude and phase information of the first and second sampling signals;
wherein, the reflection coefficient includes an amplitude ratio and a phase ratio, the amplitude ratio is a ratio of an amplitude of the first sampling signal to the amplitude of the second sampling signal, and the phase ratio is a ratio of the phase of the first sampling signal to the phase of the second sampling signal;
wherein, the second control unit (401) is further configured to generate a tuning instruction based on the reflection coefficient and transmit the tuning instruction to the impedance tuning unit (403);
the impedance tuning unit (403) is configured to execute the tuning instruction;
the impedance tuning unit (403) comprises a digitally controlled phase shifter (S), a first switch (K), a first capacitor (C), and a first inductor (L);
wherein the first end of the digitally controlled phase shifter (S) serves as the first end of the impedance tuning unit (403) and is connected to the active circuit (10), a second end of the digitally controlled phase shifter (S) serves as the second end of the impedance tuning unit (403) and is connected to the second end of the reflection coefficient detection unit (402);
wherein, the first end (k1) of the first switch (K) is connected to the first end of the digitally controlled phase shifter (S), the second end (k2) of the first switch (K) is open, the third end (k3) of the first switch (K) is connected to the first end of the first capacitor (C), and the fourth end (k4) of the first switch (K) is connected to the first end of the first inductor (L);
wherein, the second end of the first capacitor (C) and the second end of the first inductor (L) are grounded;
wherein, the third end of the digitally controlled phase shifter (S) and the fifth end (k5) of the first switch (K) are both connected to the third end of the second control unit (401);
wherein, the tuning instruction includes a target phase shift amount of the digitally controlled phase shifter (S) and a switching status indication of the first switch (K), the switching status indication indicates the open-and-closed state between the first end (k1) and the second end (k2), or the third end (k3), or the fourth end (k4), of the first switch (K);
wherein, the first capacitor (C) is a tunable capacitor, the first inductor (L) is a tunable inductor, and the third end of the first capacitor (C) and the first inductor (L) are both connected to the third end of the second control unit (401);
Wherein, when the switching status indication characterizes that the first end (k1) of the first switch (K) is in a closed connection with the third end (k3), the tuning instruction further includes a target capacitance value of the tunable capacitor (C), and when the switching status indication characterizes that the first end (k1) of the first switch (K) is in a closed connection with the fourth end (k4), the tuning instruction further includes a target inductance value of the tunable inductor (L);
wherein, when the reflection coefficient indicates that the antenna unit (20) is in a matched state, the target phase shift amount is 0, and the switching status indication characterizes that the first end (k1) of the first switch (K) is in a closed connection with the second end (k2).

2. The phased array antenna of claim 1, **characterized in that** the reflection coefficient detection unit (402) comprises a dual-directional coupler (402A) and an amplitude-and-phase detector (402B);
the first end of the dual-directional coupler (402A) serves as the first end of the reflection coefficient detection unit (402) and is connected to the antenna unit (20), the second end of the dual-directional coupler (402A) serves as the second end of the reflection coefficient detection unit (402) and is connected to the second end of the impedance tuning unit (403);
the amplitude-and-phase detector (402B) is connected to the dual-directional coupler (402A) and the second control unit (401) respectively.

3. The phased array antenna of claim 1 or 2, wherein the first control unit (30) is configured to adjust the antenna unit (20) according to the beam scanning instruction transmitted from a host computer, and transmit the beam switching command to the second control unit (401) after the adjustment is completed.

4. An electronic device, **characterized in that** the electronic device comprises the phased array antenna according to any one of claims 1 to 3.

## Patentansprüche

1. Eine phasengesteuerte Gruppenantenne, **dadurch gekennzeichnet, dass** die phasengesteuerte Gruppenantenne eine Antenneneinheit (20), eine aktive Schaltung (10), eine erste Steuereinheit (30) und eine aktive Stehwellen-Abstimmvorrichtung (40) umfasst, die zwischen der Antenneneinheit (20) und der aktiven Schaltung (10) in Reihe geschaltet ist,
wobei die aktive Stehwellen-Abstimmvorrichtung (40) eine Impedanzabstimmeinheit (403), eine Reflexionskoeffizienten-Erfassungseinheit (402) und eine zweite Steuereinheit (401) umfasst;
wobei die aktive Schaltung (10) mit einem ersten Ende der Impedanzabstimmeinheit (403) verbunden ist, die Antenneneinheit (20) mit einem ersten Ende der Reflexionskoeffizienten-Erfassungseinheit (402) verbunden ist, ein zweites Ende der Impedanzabstimmeinheit (403) mit einem zweiten Ende der Reflexionskoeffizienten-Erfassungseinheit (402) verbunden ist, ein erstes Ende der zweiten Steuereinheit (401) mit der ersten Steuereinheit (30) verbunden ist, ein zweites Ende der zweiten Steuereinheit (401) mit einem dritten Ende der Reflexionskoeffizienten-Erfassungseinheit (402) verbunden ist und ein drittes Ende der zweiten Steuereinheit (401) mit einem dritten Ende der Impedanzabstimmeinheit (403) verbunden ist;
wobei die zweite Steuereinheit (401) dazu ausgebildet ist, nach Empfang eines von der ersten Steuereinheit (30) übertragenen Strahlumschaltbefehls eine Triggeranweisung an die Reflexionskoeffizienten-Erfassungseinheit (402) zu senden;
wobei die Reflexionskoeffizienten-Erfassungseinheit (402) dazu ausgebildet ist, nach Erhalt der Triggeranweisung Amplituden- und Phaseninformationen eines ersten Abtastsignals und eines zweiten Abtastsignals zu erfassen und die erfassten Amplituden- und Phaseninformationen an die zweite Steuereinheit (401) zu übertragen;
wobei das erste Abtastsignal ein auf die Antenneneinheit (20) einfallendes Abtastsignal ist und das zweite Abtastsignal ein von der Antenneneinheit (20) reflektiertes Signal ist;
wobei die zweite Steuereinheit (401) dazu ausgebildet ist, auf Grundlage der Amplituden- und Phaseninformationen des ersten und des zweiten Abtastsignals einen Reflexionskoeffizienten zu erhalten;
wobei der Reflexionskoeffizient ein Amplitudenverhältnis und ein Phasenverhältnis umfasst, wobei das Amplitudenverhältnis ein Verhältnis einer Amplitude des ersten Abtastsignals zur Amplitude des zweiten Abtastsignals ist und das Phasenverhältnis ein Verhältnis der Phase des ersten Abtastsignals zur Phase des zweiten Abtastsignals ist;
wobei die zweite Steuereinheit (401) ferner dazu ausgebildet ist, auf Grundlage des Reflexionskoeffizienten eine Abstimmungsanweisung zu erzeugen und die Abstimmungsanweisung an die Impedanzabstimmeinheit (403) zu übertragen;
die Impedanzabstimmeinheit (403) dazu ausgebildet ist, die Abstimmungsanweisung auszuführen; die Impedanzabstimmeinheit (403) einen digital gesteuerten Phasenschieber (S), einen ersten Schalter (K), einen ersten Kondensator (C) und eine erste Induktivität (L) umfasst;
wobei ein erstes Ende des digital gesteuerten Phasenschiebers (S) als erstes Ende der Impedanzabstimmeinheit (403) dient und mit der aktiven Schaltung (10) verbunden ist und ein zweites Ende des digital gesteuerten Phasenschiebers (S) als zweites Ende der Impedanzabstimmeinheit (403) dient und mit dem zweiten Ende der Reflexionskoeffizienten-Erfassungseinheit (402) verbunden ist;
wobei das erste Ende (k1) des ersten Schalters (K) mit dem ersten Ende des digital gesteuerten Phasenschiebers (S) verbunden ist, das zweite Ende (k2) des ersten Schalters (K) offen ist, das dritte Ende (k3) des ersten Schalters (K) mit dem ersten Ende des ersten Kondensators (C) verbunden ist und das vierte Ende (k4) des ersten Schalters (K) mit dem ersten Ende der ersten Induktivität (L) verbunden ist;
wobei das zweite Ende des ersten Kondensators (C) und das zweite Ende der ersten Induktivität (L) geerdet sind;
wobei das dritte Ende des digital gesteuerten Phasenschiebers (S) und das fünfte Ende (k5) des ersten Schalters (K) jeweils mit dem dritten Ende der zweiten Steuereinheit (401) verbunden sind;
wobei die Abstimmungsanweisung einen Ziel-Phasenverschiebungsbetrag des digital gesteuerten Phasenschiebers (S) und eine Schaltzustandsanzeige des ersten Schalters (K) umfasst, wobei die Schaltzustandsanzeige den Offen-/Geschlossen-Zustand zwischen dem ersten Ende (k1) und dem zweiten Ende (k2) oder dem dritten Ende (k3) oder dem vierten Ende (k4) des ersten Schalters (K) angibt;
wobei der erste Kondensator (C) ein abstimmbarer Kondensator ist, die erste Induktivität (L) eine abstimmbare Induktivität ist und das dritte Ende des ersten Kondensators (C) und die erste Induktivität (L) jeweils mit dem dritten Ende der zweiten Steuereinheit (401) verbunden sind;
wobei, wenn die Schaltzustandsanzeige angibt, dass das erste Ende (k1) des ersten Schalters (K) geschlossen mit dem dritten Ende (k3) verbunden ist, die Abstimmungsanweisung ferner einen Zielkapazitätswert des abstimmbaren Kondensators (C) umfasst, und wenn die Schaltzustandsanzeige angibt, dass das erste Ende (k1) des ersten Schalters (K) geschlossen mit dem vierten Ende (k4) verbunden ist, die Abstimmungsanweisung ferner einen Zielinduktivitätswert der abstimmbaren Induktivität (L) umfasst;
wobei, wenn der Reflexionskoeffizient angibt, dass sich die Antenneneinheit (20) in einem angepassten Zustand befindet, der Ziel-Phasenverschiebungsbetrag 0 beträgt und die Schaltzustandsanzeige angibt, dass das erste Ende (k1) des ersten Schalters (K) geschlossen mit dem zweiten Ende (k2) verbunden ist.

2. Phasengesteuerte Gruppenantenne nach Anspruch 1, **dadurch gekennzeichnet, dass** die Reflexionskoeffizienten-Erfassungseinheit (402) einen bidirektionalen Koppler (402A) und einen Amplituden- und Phasendetektor (402B) umfasst;
wobei das erste Ende des bidirektionalen Kopplers (402A) als erstes Ende der Reflexionskoeffizienten-Erfassungseinheit (402) dient und mit der Antenneneinheit (20) verbunden ist, das zweite Ende des bidirektionalen Kopplers (402A) als zweites Ende der Reflexionskoeffizienten-Erfassungseinheit (402) dient und mit dem zweiten Ende der Impedanzabstimmeinheit (403) verbunden ist;
der Amplituden- und Phasendetektor (402B) jeweils mit dem bidirektionalen Koppler (402A) und der zweiten Steuereinheit (401) verbunden ist.

3. Phasengesteuerte Gruppenantenne nach Anspruch 1 oder 2, wobei die erste Steuereinheit (30) dazu ausgebildet ist, die Antenneneinheit (20) gemäß einer von einem Hostcomputer übertragenen Strahlabtastanweisung einzustellen und nach Abschluss der Einstellung den Strahlumschaltbefehl an die zweite Steuereinheit (401) zu übertragen.

4. Elektronische Vorrichtung, **dadurch gekennzeichnet, dass** die elektronische Vorrichtung die phasengesteuerte Gruppenantenne nach einem der Ansprüche 1 bis 3 umfasst.

## Revendications

1. Antenne réseau à commande de phase, **caractérisée en ce que** l'antenne réseau à commande de phase comprend une unité d'antenne (20), un circuit actif (10), une première unité de commande (30) et un appareil de réglage d'onde stationnaire active (40) connecté en série entre l'unité d'antenne (20) et le circuit actif (10),
dans laquelle l'appareil de réglage d'onde stationnaire active (40) comprend une unité de réglage d'impédance (403), une unité de détection du coefficient de réflexion (402) et une seconde unité de commande (401) ;
dans laquelle le circuit actif (10) est connecté à une première extrémité de l'unité de réglage d'impédance (403), l'unité d'antenne (20) est connectée à une première extrémité de l'unité de détection du coefficient de réflexion (402), une deuxième extrémité de l'unité de réglage d'impédance (403) est connectée à une deuxième extrémité de l'unité de détection du coefficient de réflexion (402), une première extrémité de la seconde unité de commande (401) est connectée à la première unité de commande (30), une deuxième extrémité de la seconde unité de commande (401) est connectée à une troisième extrémité de l'unité de détection du coefficient de réflexion (402), et une troisième extrémité de la seconde unité de commande (401) est connectée à une troisième extrémité de l'unité de réglage d'impédance (403) ;
dans laquelle la seconde unité de commande (401) est configurée pour envoyer une instruction de déclenchement à l'unité de détection du coefficient de réflexion (402) après réception d'une commande de commutation de faisceau transmise par la première unité de commande (30) ;
dans laquelle l'unité de détection du coefficient de réflexion (402) est configurée pour recueillir des informations d'amplitude et de phase d'un premier signal d'échantillonnage et d'un second signal d'échantillonnage après acquisition de l'instruction de déclenchement, et transmettre les informations d'amplitude et de phase recueillies à la seconde unité de commande (401) ;
dans laquelle le premier signal d'échantillonnage est un signal d'échantillonnage incident sur l'unité d'antenne (20), et le second signal d'échantillonnage est un signal réfléchi provenant de l'unité d'antenne (20) ;
dans laquelle la seconde unité de commande (401) est configurée pour obtenir un coefficient de réflexion sur la base des informations d'amplitude et de phase des premier et second signaux d'échantillonnage ;
dans laquelle le coefficient de réflexion comprend un rapport d'amplitude et un rapport de phase, le rapport d'amplitude étant un rapport entre une amplitude du premier signal d'échantillonnage et l'amplitude du second signal d'échantillonnage, et le rapport de phase étant un rapport entre la phase du premier signal d'échantillonnage et la phase du second signal d'échantillonnage ;
dans laquelle la seconde unité de commande (401) est en outre configurée pour générer une instruction de réglage sur la base du coefficient de réflexion et transmettre l'instruction de réglage à l'unité de réglage d'impédance (403) ;
l'unité de réglage d'impédance (403) étant configurée pour exécuter l'instruction de réglage ; l'unité de réglage d'impédance (403) comprenant un déphaseur à commande numérique (S), un premier commutateur (K), un premier condensateur (C) et une première inductance (L) ;
dans laquelle une première extrémité du déphaseur à commande numérique (S) sert de première extrémité de l'unité de réglage d'impédance (403) et est connectée au circuit actif (10), et une deuxième extrémité du déphaseur à commande numérique (S) sert de deuxième extrémité de l'unité de réglage d'impédance (403) et est connectée à la deuxième extrémité de l'unité de détection du coefficient de réflexion (402) ;
dans laquelle la première extrémité (k1) du premier commutateur (K) est connectée à la première extrémité du déphaseur à commande numérique (S), la deuxième extrémité (k2) du premier commutateur (K) est ouverte, la troisième extrémité (k3) du premier commutateur (K) est connectée à la première extrémité du premier condensateur (C), et la quatrième extrémité (k4) du premier commutateur (K) est connectée à la première extrémité de la première inductance (L) ;
dans laquelle la deuxième extrémité du premier condensateur (C) et la deuxième extrémité de la première inductance (L) sont mises à la terre ;
dans laquelle la troisième extrémité du déphaseur à commande numérique (S) et la cinquième extrémité (k5) du premier commutateur (K) sont toutes deux connectées à la troisième extrémité de la seconde unité de commande (401) ;
dans laquelle l'instruction de réglage comprend une quantité de déphasage cible du déphaseur à commande numérique (S) et une indication d'état de commutation du premier commutateur (K), l'indication d'état de commutation indiquant l'état ouvert/fermé entre la première extrémité (k1) et la deuxième extrémité (k2), ou la troisième extrémité (k3), ou la quatrième extrémité (k4), du premier commutateur (K) ;
dans laquelle le premier condensateur (C) est un condensateur réglable, la première inductance (L) est une inductance réglable, et la troisième extrémité du premier condensateur (C) et la première inductance (L) sont toutes deux connectées à la troisième extrémité de la seconde unité de commande (401) ;
dans laquelle, lorsque l'indication d'état de commutation indique que la première extrémité (k1) du premier commutateur (K) est en connexion fermée avec la troisième extrémité (k3), l'instruction de réglage comprend en outre une valeur de capacité cible du condensateur réglable (C), et lorsque l'indication d'état de commutation indique que la première extrémité (k1) du premier commutateur (K) est en connexion fermée avec la quatrième extrémité (k4), l'instruction de réglage comprend en outre une valeur d'inductance cible de l'inductance réglable (L) ;
dans laquelle, lorsque le coefficient de réflexion indique que l'unité d'antenne (20) est dans un état adapté, la quantité de déphasage cible est égale à 0, et l'indication d'état de commutation indique que la première extrémité (k1) du premier commutateur (K) est en connexion fermée avec la deuxième extrémité (k2).

2. Antenne réseau à commande de phase selon la revendication 1, **caractérisée en ce que** l'unité de détection du coefficient de réflexion (402) comprend un coupleur bidirectionnel (402A) et un détecteur d'amplitude et de phase (402B) ;
la première extrémité du coupleur bidirectionnel (402A) servant de première extrémité de l'unité de détection du coefficient de réflexion (402) et étant connectée à l'unité d'antenne (20), la deuxième extrémité du coupleur bidirectionnel (402A) servant de deuxième extrémité de l'unité de détection du coefficient de réflexion (402) et étant connectée à la deuxième extrémité de l'unité de réglage d'impédance (403) ;
le détecteur d'amplitude et de phase (402B) étant connecté respectivement au coupleur bidirectionnel (402A) et à la seconde unité de commande (401).

3. Antenne réseau à commande de phase selon la revendication 1 ou 2, dans laquelle la première unité de commande (30) est configurée pour régler l'unité d'antenne (20) conformément à une instruction de balayage de faisceau transmise depuis un ordinateur hôte, et transmettre la commande de commutation de faisceau à la seconde unité de commande (401) une fois le réglage achevé.

4. Dispositif électronique, **caractérisé en ce que** le dispositif électronique comprend l'antenne réseau à commande de phase selon l'une quelconque des revendications 1 à 3.
